# EUROPÄISCHE PATENTSCHRIFT

(11) **EP 1 028 402 B1**
(45) Veröffentlichungstag und Bekanntmachung des Hinweises auf die Patenterteilung: **20.08.2003**
(21) Anmeldenummer: 99102459.7
(22) Anmeldetag: 09.02.1999
(51) Int. Cl.: G08B 13/24

(54) **Sicherungsetikett mit Hologramm und Detektionsstreifen**
Security label with hologram and detection strip
Etiquette de sécurité avec hologramme et bande de détection

(43) Veröffentlichungstag der Anmeldung: 16.08.2000
(73) Patentinhaber: topac MultimediaPrint GmbH, 33332 Gütersloh (DE)
(72) Erfinder: Spilker, Udo, 33603 Steinhagen (DE)
(74) Vertreter: Schaumburg, Thoenes & Thurn

(56) Entgegenhaltungen:
- EP-A- 0 673 853
- DE-A- 4 323 883
- FR-A- 2 704 964

## Beschreibung

Die Erfindung betrifft ein Sicherungsetikett mit einer Deckschicht sowie weiteren Schichten.

Aus dem Gebrauchsmuster G 92 10 781 ist ein Diebstahlsicherungsetikett bekannt, bei dem zwischen zwei Schichten ein elektrischer Schwingkreis angeordnet ist. Dieser Schwingkreis entzieht einem elektromagnetischen Feld, das durch Antennen erzeugt wird, elektrische Energie. Das bekannte Diebstahlsicherungsetikett wird üblicherweise an einer Ware befestigt. Wenn ein Kunde mit dieser Ware einen Sicherheitsbereich durchschreitet, in welchem das elektromagnetische Feld wirksam ist, und der aktive Schwingkreis diesem Feld Energie entnimmt, so wird ein Alarm ausgelöst.

Es gibt Sicherungsetikette, die einen Detektionsstreifen enthalten, mit dessen Hilfe das Vorhandensein des Etiketts innerhalb eines Alarmbereichs erkannt werden kann. Der Detektionsstreifen ist im allgemeinen magnetisierbar. Wenn der Kunde die mit dem Sicherungsetikett versehene Ware bezahlt, so wird der Detektionsstreifen derart magnetisiert, daß er im Alarmbereich keinen Alarm auslöst. Bei einer nicht bezahlten Ware jedoch hat der Detektionsstreifen einen zuvor eingeprägten Magnetisierungszustand, der innerhalb des Alarmbereichs detektiert wird. Auf diese Weise kann eine Diebstahlsicherung realisiert werden.

Ferner ist es aus dem Stand der Technik, beispielsweise bei Banknoten, bekannt, die Fälschungssicherheit von Waren dadurch zu erhöhen, daß sie oder die Verpackung mit Hologrammen versehen werden. Derartige Hologramme sind nur mit aufwendigen Werkzeugen herstellbar. Das Fehlen eines solchen Hologramms oder die Abweichung des Hologramms vom Original kann von einem Betrachter relativ leicht festgestellt werden. Auf diese Weise kann sich ein Hersteller in einem gewissen Maße vor Raubkopien schützen.

Aus der EP-A-0673853 ist ein Sicherungsetikett bekannt, welches mit Hilfe einer Klebeverbindung auf einen Artikel aufgebracht werden kann, um diesen vor Diebstahl zu sichern. Das Sicherungsetikett trägt ein Hologramm, das über eine selbstklebende Beschichtung mit einem Sicherungselement, nämlich einer weichmagnetischen Dünnfilmschicht, verbunden ist. Dieses Sicherungselement ist auf der Oberfläche einer Trägerfolie aufgebracht. Das Sicherungselement kann beispielsweise magnetisches Material enthalten. Diese Trägerfolie hat auf der dem Sicherungselement gegenüberliegenden Fläche eine Klebeschicht, die mit dem Artikel verbunden wird.

Es ist Aufgabe der Erfindung, ein Sicherungsetikett anzugeben, das einfach aufgebaut ist, vor Raubkopien schützt und eine Diebstahlsicherung ermöglicht.

Diese Aufgabe wird für ein Sicherungsetikett durch die Merkmale des Anspruchs 1 gelöst. Das Sicherungsetikett nach der Erfindung umfaßt eine Deckschicht, unterhalb der eine Metallschicht angeordnet ist. Diese Metallschicht dient als Reflexionsschicht; sie trägt auf ihrer Unterseite eingeprägtes ein Hologramm, dessen Strukturen bei der Reflexion ein holografisches Bild entstehen lassen. Unterhalb der Metallschicht ist ein Detektionsstreifen angeordnet. Wiederum unterhalb der Metallschicht und dem Detektionsstreifen ist eine Klebeschicht vorgesehen.

Die Erfindung erfüllt mehrere Funktionen gleichzeitig: Durch das Hologramm und die Metallschicht erhält das Sicherungsetikett ein angenehmes Aussehen und erregt beim Kunden eine hohe Aufmerksamkeit, da das Hologramm eine dreidimensionale Bildstruktur mit Farbeffekten erzeugt. Der Detektionsstreifen ermöglicht in an sich bekannter Weise die Detektion des Etiketts und damit der Ware. Da der Detektionsstreifen vom Kunden aus gesehen unterhalb der Metallschicht angeordnet ist, ist er nicht sichtbar. Dadurch wird der Kunde.nicht auf die integrierte Sicherheitsfunktion aufmerksam gemacht. Die Klebeschicht erfüllt eine dreifache Funktion. Einerseits dient sie zum Anbringen des Sicherungsetiketts auf der Verpackung der Ware oder auf der Ware selbst. Andererseits dient sie auch zur Fixierung des Detektionsstreifens auf der Metallschicht. Weiterhin stellt sie die Haftkraft für die Metallschicht bereit.

Das Sicherungsetikett nach der Erfindung hat einen einfachen Aufbau und läßt sich in verschiedenen Warengebieten vielfältig einsetzen. Die Hologrammstruktur gibt einen gewissen Schutz gegen Nachahmung. Der integrierte Detektionsstreifen erhöht die Diebstahlsicherung.

Bei einem bevorzugten Ausführungsbeispiel ist zwischen der Deckschicht und der Metallschicht eine Zwischenschicht angeordnet, die die Haftkraft zwischen Deckschicht und Metallschicht partiell reduziert. Dadurch wird erreicht, daß beim Abziehen der Deckschicht, beispielsweise eine dünne Polyesterfolie, die Metallschicht mit dem Hologramm partiell zerstört wird. An Stellen, an denen die Haftkraft reduziert ist, bleibt die Metallschicht mit dem Hologramm an der Klebeschicht haften. An Stellen ohne reduzierte Haftkraft haftet die Metallschicht an der Deckschicht an. Auf diese Weise kann sogleich erkannt werden, ob am Sicherungsetikett manipuliert worden ist.

Vorzugsweise ist die Zwischenschicht nach Art eines geometrischen Musters ausgebildet, beispielsweise als Muster mit aneinander angrenzenden Quadraten. Diese Quadrate haben dann nach Art eines Schachbrettmusters abwechselnd eine Haftkraftreduzierung. Beim Abziehen der Deckschicht bleibt dann ein Teil der Quadrate auf der Klebeschicht haften, ein anderer Teil haftet an der Deckschicht an. Andere Muster sind Rautenmuster, kreisförmige Muster, Rechteckmuster etc. .

Als Zwischenschicht kann z.B. eine dünne Schicht aus transparentem Lack (auch Trennlack genannt) verwendet werden. Die Schicht enthält Silicon und/oder Wachs. Ihre Dicke liegt im µm-Bereich, typischerweise im Bereich von 0,1 bis 3 µm. Die Haftkraft zwischen der Deckschicht und der Metallschicht kann über den Auftrag der Zwischenschicht eingestellt werden. Eine hohe Haftkraft wird bei einem dünnen Auftrag erzielt, z.B. bei einem Flächengewicht von 1g/m². Eine niedrige Haftkraft ergibt sich bei einem Flächengewicht von 3g/m².

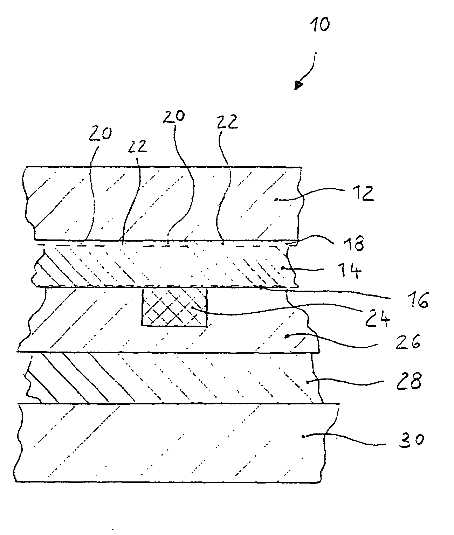

Ein Ausführungsbeispiel der Erfindung wird anhand der Figur erläutert. In dieser Figur ist ein Querschnitt durch ein Sicherungsetikett 10 schematisch dargestellt. Die Dicken der verschiedenen Schichten sind nicht maßstabsgetreu. Unterhalb einer Deckschicht 12 aus einer durchscheinenden Polyesterfolie ist eine Metallschicht 14 angeordnet, auf deren Unterseite ein Hologramm 16 in einem Prägeverfahren aufgeprägt ist. Die Polyesterfolie 12 hat eine Dicke von 12 - 100 µm, typischerweise 35 µm. Die Metallschicht 14 ist nicht durchscheinend und dient als Reflexionsschicht. Sie hat typischerweise eine Dicke von 0,1 µm. Zwischen der Deckschicht 12 und der Metallschicht 14 kann optional eine die Haftkraft zwischen Deckschicht 12 und Metallschicht 14 reduzierende Zwischenschicht 18 vorgesehen sein. In der Figur 1 hat diese Zwischenschicht 18 ein vorgegebenes geometrisches Muster derart, daß an gestrichelt gezeichneten Stellen 20 die Haftkraft reduziert ist; an Stellen 22 fehlt die dünne Zwischenschicht und die Haftkraft ist nicht reduziert. Wenn nun versucht wird, die Deckschicht 12 vom Sicherungsetikett 10 abzulösen, so wird an Stellen 20 mit reduzierter Haftkraft die Metallschicht von der Deckschicht 12 nicht mit abgezogen, sondern nur an den Stellen 22. Auf diese Weise wird eine Manipulation an dem Sicherungsetikett 10 sogleich sichtbar. Die dünne Zwischenschicht 18 kann als geometrisches Muster ausgebildet sein und z.B. Rauten, Quadrate, Kreise, Ellipsen etc. enthalten, wobei nur an vorbestimmten Musterelementen die Haftkraft reduziert ist, an anderen Musterelementen jedoch nicht.

Bei einer Variante des Ausführungsbeispiels ist die dünne Zwischenschicht 18 über die gesamte Metallschicht 18 gleichmäßig dick ausgebildet. Dies bedeutet, daß die Haftkraft zwischen Deckschicht 12 und Metallschicht 13 auf der gesamten Fläche reduziert ist. Somit kann die Deckschicht 12 bei der Anwendung des Sicherungsetiketts 10 ohne Zerstörung der Metallschicht abgelöst werden. Auf diese Weise wird die Dicke des Sicherungsetiketts 10 bei der Anwendung weiter reduziert.

Die dünne Zwischenschicht 18 besteht vorzugsweise aus transparentem Lack. Dieser Lack enthält Silikon und/oder Wachs. Die Dicke der Lackschicht 18 liegt zwischen 0,1 µm und 3 µm.

Unterhalb der Metallschicht 14 ist ein Detektionsstreifen 24 angeordnet. Seine Breite liegt im Millimeter-Bereich, z.B. 0,5 bis 10 mm, typischerweise 2 - 3 mm. Seine Dicke beträgt typischerweise 100 µm. Der Detektionsstreifen 24 erstreckt sich in Richtung senkrecht zur Papierebene.

Der Detektionsstreifen 24 ist vorzugsweise als permanentmagnetischer Streifen ausgebildet. Das Sicherungsetikett 10 wird beim Zahlen an der Kasse entfernt und wieder verwendet. Wenn ein Dieb die Ware, versehen mit dem Sicherungsetikett, durch eine Schleuse trägt, so wird das Magnetfeld des Detektionsstreifens erkannt und ein Alarm ausgelöst.

Der Detektionsstreifen 24 kann gemäß einer Alternative aus zwei nebeneinander angeordneten Streifen aus magnetisierbarem Material bestehen, wobei ein Streifen einen permanent eingeprägten Magnetzustand hat. Wenn die mit dem Sicherungsetikett 10 versehene Ware ordnungsgemäß an der Kasse bezahlt wird, so wird der Magnetisierungszustand des anderen Streifens so geändert, daß der erste Magnetzustand neutralisiert wird. in diesem geänderten Zustand wird beim Durchschreiten einer Schleuse, die eine Detektionsvorrichtung für den Detektionsstreifen enthält, kein Alarm ausgelöst. Wird das Sicherungsetikett 10 jedoch im ersten Magnetisierungszustand durch die Schleuse transportiert, so wird dieser erste Magnetisierungszustand von der Detektionseinrichtung erkannt und ein Alarm ausgelöst.

Als Detektionsstreifen 24 können auch zwei übereinander angeordnete Magnetstreifen verwendet werden, die unterschiedliche Magnetisierungszustände annehmen können. Eine andere Variante besteht darin, daß der Detektionsstreifen Teil eines Schwingkreises ist, der ein elektromagnetisches Feld beeinflußt.

Unterhalb der Metallschicht 14 und des Detektionsstreifens 24 ist eine Klebeschicht 26 angeordnet. Diese Klebeschicht 26 stützt einerseits den Detektionsstreifen 24; andererseits dient diese Klebeschicht 24 dazu, das Sicherungsetikett 10 mit der Verpackung oder der Ware zu verbinden.

Unterhalb der Klebeschicht 26 ist eine Trennschicht 28 angeordnet, die beispielsweise aus Silikon besteht. Diese Trennschicht 28, die relativ dünn ausgebildet ist, dient zum leichten Ablösen des Sicherungsetiketts 10 von einer Trägerschicht 30 aus Papierfolie oder einer Kunststoffolie. Diese Trägerschicht 30 hat typischerweise ein Flächengewicht von 60 bis 120 g/m².

Das Sicherungsetikett 10 hat ein angenehmes Aussehen, da die Metallschicht 14 mit dem Hologramm 16 Farbeffekte erzeugt. Durch das Hologramm 16 ist das Sicherungsetikett 10 und die damit verbundene Ware in einem gewissen Grade gegen Nachahmung geschützt. Die Detektionsschicht 24 ist von außen nicht sichtbar. Sie ermöglicht eine Diebstahlsicherung.

### Bezugszeichenliste

- 10: Sicherungsetikett
- 12: Deckschicht
- 14: Metallschicht
- 16: Hologramm
- 18: Zwischenschicht
- 20: haftreduzierende Stelle
- 22: Stelle ohne Haftreduzierung
- 24: Detektionsstreifen
- 26: Klebeschicht
- 28: Trennschicht
- 30: Trägerschicht

## Patentansprüche

1. Sicherungsetikett, umfassend
eine Deckschicht (12),
eine unterhalb der Deckschicht (12) angeordnete Metallschicht (14), die auf Ihrer Unterseite ein Hologramm (16) trägt,
einem unterhalb der Metallschicht (14) angeordneten Detektionsstreifen (24),
und eine unmittelbar unterhalb der Metallschicht (14) und des Detektionsstreifens (24) angeordnete Klebeschicht (26), die sowohl den Detektionsstreifen (24) auf der Metallschicht (14) fixiert, als auch zur Befestigung an einen Artikel dient.

2. Etikett nach Anspruch 1, **dadurch gekennzeichnet, daß** die Deckschicht (12) eine durchscheinende Polyesterfolie ist.

3. Etikett nach Anspruch 1 oder 2, **dadurch gekennzeichnet, daß** die Dicke der Deckschicht (12) im Bereich von 12 bis 100 µm liegt.

4. Etikett nach einem der vorhergehenden Ansprüche, **dadurch gekennzeichnet, daß** zwischen der Deckschicht (12) und der Metallschicht (14) eine Zwischenschicht (18) angeordnet ist, die die Haftkraft zwischen Deckschicht (12) und Metallschicht (14) reduziert.

5. Etikett nach Anspruch 4, **dadurch gekennzeichnet, daß** die Zwischenschicht (18) die Form eines geometrischen Musters hat, vorzugsweise bestehend aus kreisförmigen, vieleckförmigen, rechteckigen oder quadratischen Elementen.

6. Etikett nach einem der vorhergehenden Ansprüche, **dadurch gekennzeichnet, daß** die Metallschicht (14) aus Aluminium besteht.

7. Etikett nach einem der vorhergehenden Ansprüche, **dadurch gekennzeichnet, daß** die nicht durchscheinende und als Reflexionsschicht dienende Metallschicht (14) eine Dicke von annähernd 0,1 µm hat.

8. Etikett nach einem der vorhergehenden Ansprüche, **dadurch gekennzeichnet, daß** als Hologramm (16) ein Prägehologramm vorgesehen ist.

9. Etikett nach einem der vorhergehenden Ansprüche, **dadurch gekennzeichnet, daß** der Detektionsstreifen (24) magnetisches Material enthält, dessen Magnetzustand von außen änderbar ist, wobei der Detektionsstreifen (24) vorzugsweise mehrere Schichten mit magnetisierbarem Material enthält.

10. Etikett nach Anspruch 9, **dadurch gekennzeichnet, daß** der Detektionsstreifen (24) einen vorbestimmten Magnetzustand eingeprägt hat.

11. Etikett nach Anspruch 9, **dadurch gekennzeichnet, daß** der Detektionsstreifen (24) permanent magnetisch ist.

12. Etikett nach Anspruch 9, **dadurch gekennzeichnet, daß** der Detektionsstreifen (24) elektrisch leitfähiges Material enthält.

13. Etikett nach Anspruch 9, **dadurch gekennzeichnet, daß** der Detektionsstreifen (24) eine mehrschichtige Struktur hat, die auf Radiofrequenzen reagiert.

14. Etikett nach einem der vorhergehenden Ansprüche, **dadurch gekennzeichnet, daß** unterhalb der Klebeschicht (26) eine Trägerschicht (30) angeordnet ist.

15. Etikett nach Anspruch 14, **dadurch gekennzeichnet, daß** zwischen Trägerschicht (30) und Klebeschicht (26) eine Trennschicht (28) angeordnet ist.

16. Etikett nach Anspruch 14, **dadurch gekennzeichnet, daß** als Trägerschicht (30) eine Papierfolie oder eine Kunststoffolie vorgesehen ist.

17. Etikett nach einem der vorhergehenden Ansprüche, **dadurch gekennzeichnet, daß** die Trägerschicht (30) ein Flächengewicht von 60 bis 120 g/m² hat.

18. Etikett nach einem der vorhergehenden Ansprüche, **dadurch gekennzeichnet, daß** die Zwischenschicht (18) transparent ist und Silikon und/oder Wachs enthält.

## Claims

1. Security label, comprising
a covering layer (12),
a metal layer (14) underneath the covering layer (12), the metal layer having a hologram (16) on its underside,
a detection strip (24) underneath the metal layer (14),
and an adhesive layer (26) directly underneath the metal layer (14) and the detection strip (24), the adhesive layer both fixing the detection strip (24) onto the metal layer (14) and also fixing the label to the article.

2. Label per Claim 1, **characterised by** the fact that the covering layer (12) is a transparent polyester film.

3. Label per Claim 1 or 2, **characterised by** the fact that the thickness of the covering layer (12) is in the range of 12 to 100 µm.

4. Label per one of the above claims, **characterised by** the fact that between the covering layer (12) and the metal layer (14), there is an intermediate layer (18) which reduces the adhesive force between the covering layer (12) and the metal layer (14).

5. Label per Claim 4, **characterised by** the fact that the intermediate layer (18) is in the form of a geometric pattern, consisting preferably of circular, polygonal, rectangular or square elements.

6. Label per one of the above claims, **characterised by** the fact that the metal layer (14) is made of aluminium.

7. Label per one of the above claims, **characterised by** the fact that the non-transparent metal layer (14) acting as a reflective layer is around 0.1 µm thick.

8. Label per one of the above claims, **characterised by** the fact that a stamped hologram is specified as the hologram (16).

9. Label per one of the above claims, **characterised by** the fact that the detection strip (24) contains magnetic material, whose magnetic state can be altered externally, whereby the detection strip (24) preferably contains a number of layers with material which can be magnetised.

10. Label per claim 9, **characterised by** the fact that the detection strip (24) has been stamped with a predefined magnetic state.

11. Label per claim 9, **characterised by** the fact that the detection strip (24) is permanently magnetic.

12. Label per claim 9, **characterised by** the fact that the detection strip (24) contains electrically conductive material.

13. Label per claim 9, **characterised by** the fact that the detection strip (24) has a multilayer structure which reacts to radio frequencies.

14. Label per one of the above claims, **characterised by** the fact that there is a carrier layer (30) underneath the adhesive layer (26).

15. Label per Claim 14, **characterised by** the fact that there is a separating layer (28) between the carrier layer (30) and the adhesive layer (26).

16. Label per Claim 14, **characterised by** the fact that a paper film or a plastic film is specified as the carrier layer (30).

17. Label per one of the above claims, **characterised by** the fact that the carrier layer (30) has a basis weight of 60 to 120 g/m².

18. Label per one of the above claims, **characterised by** the fact that the intermediate layer (18) is transparent and contains silicone and / or wax.

## Revendications

1. Etiquette de sécurité comprenant une couche de revêtement (12), une couche métallique (14) disposée en dessous de la couche de revêtement (12) et comportant un hologramme (16) sur son côté inférieur, une bande de détection (24) disposée sous la couche métallique (14) et une couche adhésive (26) disposée directement sous la couche métallique (14) et sous la bande de détection (24) qui fixe la bande de détection (24) sur la bande métallique (14) et sert à la fixation sur un article.

2. Etiquette selon la revendication 1, **caractérisée en ce que** la couche de revêtement (12) est un film de polyester translucide.

3. Etiquette selon la revendication 1 ou 2, **caractérisée en ce que** l'épaisseur de la couche de revêtement (12) est de 12 à 100 µm.

4. Etiquette selon l'une des revendications précédentes, **caractérisée en ce que**, entre la couche de revêtement (12) et la couche métallique (14), se trouve une couche intermédiaire (18) qui réduit l'adhérence entre la couche de revêtement (12) et la couche métallique (14).

5. Etiquette selon la revendication 4, **caractérisé en ce que** la couche intermédiaire (18) a la forme d'un motif géométrique, constitué de préférence d'éléments circulaires, polygonaux, rectangulaires ou carrés.

6. Etiquette selon l'une des revendications précédentes, **caractérisée en ce que** la couche métallique (14) est constituée d'aluminium.

7. Etiquette selon l'une des revendications précédentes, **caractérisée en ce que** la couche métallique (14) non translucide, servant de couche de réflexion, a une épaisseur d'environ 0,1 µm.

8. Etiquette selon l'une des revendications précédentes, **caractérisée en ce que** l'hologramme (16) soit un hologramme incrusté.

9. Etiquette selon l'une des revendications précédentes, **caractérisée en ce que** la bande de détection (24) contient un matériau magnétique dont l'état magnétique est modifiable de l'extérieur, moyennant quoi la bande de détection (24) comporte, de préférence, plusieurs couches avec un matériau magnétisable.

10. Etiquette selon la revendication 9, **caractérisée en ce que** la bande de détection (24) a un état magnétique prédéterminé.

11. Etiquette selon la revendication 9., **caractérisée en ce que** la bandé de détection (24) est magnétisée en permanence.

12. Etiquette selon la revendication 9, **caractérisée en ce que** la bande de détection (24) contient un matériau conducteur d'électricité.

13. Etiquette selon l'une des revendications précédentes, **caractérisée en ce que** la bande de détection (24) a une structure multicouches qui réagit à des fréquences radio.

14. Etiquette selon l'une des revendications précédentes, **caractérisée en ce que**, sous la couche adhésive (26), se trouve une couche de support (30).

15. Etiquette selon la revendication 14, **caractérisée en ce que**, entre la couche de support (30) et la couche adhésive (26), se trouve une couche de séparation (28).

16. Etiquette selon la revendication 14, **caractérisée en ce que**, comme couche de support (30), une feuille de papier ou de matière plastique, est prévue.

17. Etiquette selon l'une des revendications précédentes, **caractérisée en ce que** la couche de support (30) a un poids surfacique de 60 à 120 g/m².

18. Etiquette selon l'une des revendications précédentes, **caractérisée en ce que** la couche intermédiaire (18) est transparente et contient du silicone et/ou de la cire.
